(19) Europäisches Patentamt
European Patent Office
Office européen des brevets

(11) **EP 3 288 173 B1**

(12) **FASCICULE DE BREVET EUROPEEN**

(45) Date de publication et mention
de la délivrance du brevet:
**19.06.2019 Bulletin 2019/25**

(51) Int Cl.:
***H02P 3/18*** *(2006.01)*

(21) Numéro de dépôt: **17187597.4**

(22) Date de dépôt: **23.08.2017**

(54) **PROCEDE DE COMMANDE DE FREINAGE D'UN MOTEUR ELECTRIQUE**

BREMSSTEUERVERFAHREN EINS ELEKTROMOTORS

METHOD FOR CONTROLLING THE BRAKING OF AN ELECTRIC MOTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.08.2016 FR 1657889**

(43) Date de publication de la demande:
**28.02.2018 Bulletin 2018/09**

(73) Titulaire: **Schneider Electric Industries SAS
92500 Rueil-Malmaison (FR)**

(72) Inventeurs:
• **PENKOV, Delcho**
**38050 GRENOBLE Cedex 9 (FR)**
• **GANDANEGARA, Grace**
**38050 GRENOBLE Cedex 9 (FR)**
• **DURAND, Christophe**
**38050 GRENOBLE Cedex 9 (FR)**

(74) Mandataire: **Brevalex
95, rue d'Amsterdam
75378 Paris Cedex 8 (FR)**

(56) Documents cités:
**EP-A2- 2 937 988     WO-A2-01/89073
US-A- 5 008 608**

• **LEE K ET AL: "Influence of deep bar effect on
induction machine modeling with
gamma-controlled soft starters", APPLIED
POWER ELECTRONICS CONFERENCE AND
EXPOSITION, 2005. APEC 2005. TWENTIETH
ANNUAL IEEE AUSTIN, TX, USA 6-10 MARCH
2005, PISCATAWAY, NJ, USA,IEEE, US, vol. 3, 6
mars 2005 (2005-03-06), page 1858, XP010809506,
DOI: 10.1109/APEC.2005.1453302 ISBN:
978-0-7803-8975-5**

**Description**

**DOMAINE TECHNIQUE**

L'invention concerne un procédé de commande de freinage d'un moteur électrique.

**ART ANTÉRIEUR**

Lors du démarrage et de l'arrêt d'un moteur (de type synchrone ou asynchrone) alimenté par une source de tension alternative $V_{AC}$, des phénomènes parasitaires, tels que des courants et tensions transitoires, peuvent apparaître. Afin de limiter le niveau de stress du moteur, et de perturber d'autres charges connectées sur la même source de tension, il est primordial de limiter ces phénomènes parasitaires.

A cet égard, un variateur de vitesse peut assurer de manière très efficace cette fonction de limitation des phénomènes parasitaires tant pour le démarrage et l'arrêt du moteur, que pour le pilotage fin de la vitesse de rotation du moteur.

Cependant cette solution n'est pas totalement satisfaisante.

En effet, le coût particulièrement élevé d'un variateur de vitesse limite son utilisation. Par ailleurs, un variateur de vitesse est encombrant et peut présenter un poids et un coût additionnel important.

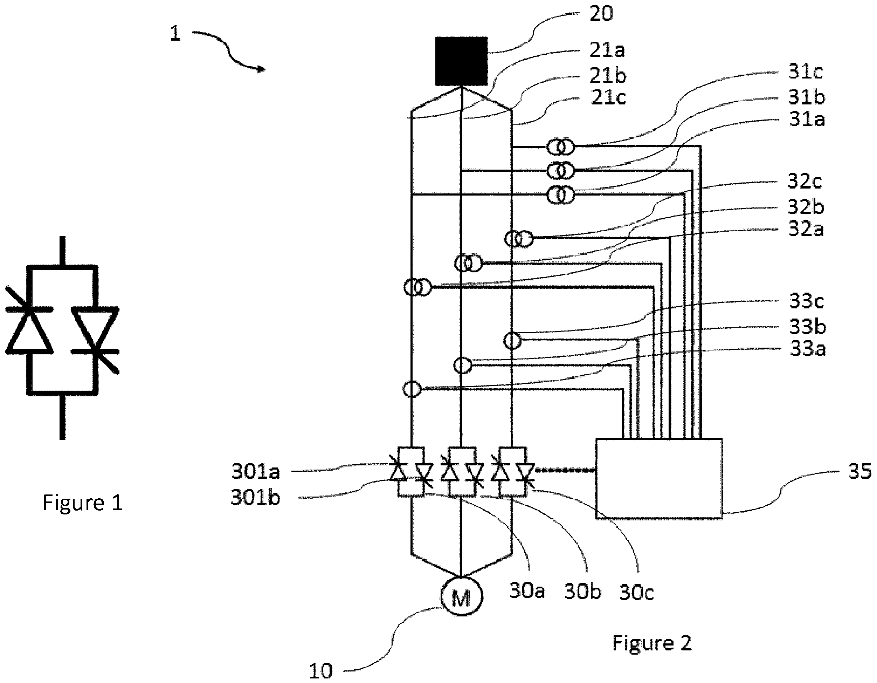

Afin de pallier ces inconvénients, le document [1], cité à la fin de la description, propose un dispositif alternatif nommé, selon la terminologie Anglo-Saxonne, « Soft-Starter ». Un tel dispositif est en général un interrupteur commandé, comprenant deux thyristors montés tête-bêche en parallèle (figure 1), disposé entre la source de tension alternative et le moteur.

Les thyristors connectés en tête bêche sont aptes à connecter le moteur à la phase respectivement en alternance positive et négative en tension de cette dernière. A chaque alternance du courant traversant le thyristor, le courant s'annule naturellement en-dessous d'un seuil dépendant du thyristor, mais proche de zéro. La gâchette du thyristor correspondant est ensuite alimentée de manière à remettre en conduction le courant. Il en résulte une durée variable d'interruption du courant alimentant le moteur, et par conséquent une alimentation en courant réduit du moteur. La commande de la remise en conduction du thyristor est réalisée avec un délai de temps ou degrés électriques (plus particulièrement un retard d'alimentation) décompté par rapport à une référence relative à la tension ou au courant.

L'ajustement de ce retard d'alimentation de la gâchette peut être soit selon une commande alpha (a), c'est-à-dire que la gâchette est alimentée avec un retard correspondant à un angle $\alpha$ après le passage par zéro de la tension de la phase correspondante, soit selon une commande gamma ($\gamma$), c'est-à-dire que la gâchette est alimentée avec un retard correspondant à un angle après le passage par zéro du courant de la phase correspondante. On peut également imaginer des ajustements de retard par rapport à des grandeurs issues d'un traitement spécifique tel que la dérivée du courant. Que ce soit l'angle $\alpha$, ou l'angle $\gamma$, ces deux retards, qui correspondent respectivement à des temps de $\alpha T/2\pi$ et $\gamma T/2\pi$ avec T la période de la tension d'alimentation, correspondent à un retard $t_{ret}$ d'alimentation en courant du moteur.

La demande de brevet [2] (citée à la fin de la description) de la Demanderesse décrit un procédé de démarrage d'un moteur exécuté par un interrupteur commandé comprenant au moins deux thyristors. Le procédé de démarrage du moteur comprend une phase de vérification de changement d'état du moteur qui conditionne l'accélération dudit moteur après chaque diminution du retard d'alimentation de la gâchette selon l'une ou l'autre des commande alpha et commande gamma.

Un procédé de commande de freinage peut reprendre les mêmes principes décrits dans la demande de brevet [2], et considérer une augmentation séquentielle du retard selon l'une ou l'autre des commandes alpha et commande gamma, en combinaison avec une étape de vérification de changement d'état du moteur.

Cependant, un tel procédé de commande de freinage ne peut être satisfaisant.

En effet, le contrôle de l'augmentation du retard selon une commande alpha génère des oscillations du courant traversant le moteur qui peuvent provoquer des contraintes mécaniques et des disfonctionnements au niveau du moteur.

Par ailleurs, le contrôle de l'augmentation du retard selon une commande gamma manque de précision dans la détermination du passage par zéro du courant.

Le brevet US5008608 divulgue un contrôleur pour démarrer et arrêter des moteurs électriques.

Un but de la présente invention est donc de proposer un procédé de commande de freinage permettant de réduire les oscillations du courant traversant le moteur, tout en exerçant un contrôle précis de la décélération du moteur.

**EXPOSÉ DE L'INVENTION**

Le but de l'invention est, au moins en partie, atteint par un procédé de commande de freinage d'un moteur électrique connecté à une source de tension alternative $V_{AC}$ de période T, le procédé consistant, à chaque période de la tension alternative $V_{AC}$, à alimenter le moteur en courant, via l'amorçage d'un interrupteur commandé, avec un retard $t_{ret}$, à un angle $\alpha$ d'amorçage, ledit angle $\alpha$ étant mesuré par rapport au passage par zéro de la tension alternative $V_{AC}$, le procédé comprenant une séquence de freinage dans laquelle, toutes les n périodes de la tension alternative $V_{AC}$, les étapes suivantes sont exécutées :

    a) détermination de la valeur d'une variation $\Delta Rr$ de résistance électrique du moteur durant les n périodes précédentes de la tension alternative $V_{AC}$,

b) comparaison de la valeur de la variation de résistance électrique du moteur, déterminée à l'étape a), avec une valeur seuil de résistance $R_t$,

c) augmentation du retard $t_{ret}$ si la valeur de la variation de la résistance du moteur est inférieure à la valeur seuil de résistance, l'augmentation du retard $t_{ret}$ étant exécutée selon une commande gamma dès lors que l'angle $\alpha$ est compris dans une plage de valeurs donnée, et selon une commande alpha dans les autres cas.

L'augmentation du retard selon la commande gamma correspond, par exemple, à un angle d'amorçage $\gamma$ mesuré par rapport au passage par zéro de la période considérée du courant délivré par la source

Selon un mode de réalisation, la plage de valeurs donnée s'étend sur 30° entre 45° et 80°.

Selon un mode de réalisation, la plage de valeurs donnée s'étend entre 50° et 80°.

Selon un mode de réalisation, la plage de valeurs donnée s'étend entre 45° et 75°.

Selon un mode de réalisation, le procédé débute par une étape d'initialisation du retard $t_{ret}$ à une valeur $t_{retinit}$, adaptée pour conférer à l'interrupteur commandé un fonctionnement en pleine onde, $t_{retinit}$ étant avantageusement ajustée de manière à déclencher la fermeture de l'interrupteur commandé dès l'instant de passage par zéro d'un courant traversant l'interrupteur commandé.

Selon un mode de réalisation, à l'étape c), l'augmentation du retard $t_{ret}$ est exécutée selon un incrément $\Delta t$, de sorte que l'angle défini par la relation $2\pi\Delta t/T$ soit inférieur à 5°, préférentiellement inférieur à 3°, encore plus préférentiellement compris entre 0,5 et 2°.

Selon un mode de réalisation, dès lors que le retard $t_{ret}$ est augmenté à l'étape c), un temps d'attente $t_{buf}$ est imposé avant de répéter la séquence de freinage, préférentiellement, le temps d'attente $t_{buf}$ est un multiple entier p de la période T de la tension alternative $V_{AC}$, encore plus préférentiellement p est égal à 2.

Selon un mode de réalisation, l'étape a) est une étape de détermination d'une variation temporelle relative de la résistance du moteur $\dfrac{\frac{\Delta R}{R}(t)}{\Delta t}$, ladite variation temporelle relative étant préférentiellement calculée à partir de l'équation suivante :

$$\frac{\frac{\Delta R}{R}(t)}{\Delta t} = \frac{\frac{R(t-nT)-R(t)}{R(t-nT)}}{nT}$$

avec R(t) une valeur relative à la résistance du moteur déterminée à un instant t.

Selon un mode de réalisation, dès lors que l'angle d'amorçage $\alpha$ est supérieur à 120° et/ou le courant circulant dans le moteur est inférieur à une valeur de courant prédéterminée, il est mis fin au procédé de commande de freinage du moteur, avantageusement, l'interrupteur commandé est ouvert.

Selon un mode de réalisation, la valeur seuil de résistance $R_t$ est comprise entre 0,05 et 0,5, préférentiellement comprise entre 0,1 et 0,3, encore plus préférentiellement comprise entre 0,15 et 0,25.

Selon un mode de réalisation, l'interrupteur commandé comprend deux thyristors montés tête-bêche en parallèle.

L'invention concerne également un produit programme d'ordinateur comportant des instructions de code de programme pour l'exécution, lorsque ledit programme est exécuté sur un calculateur, des étapes de détermination d'une variation d'une résistance du moteur, de comparaison de ladite variation à une valeur seuil de résistance $R_t$, de sélection d'une commande d'augmentation du retard $t_{ret}$ choisi parmi l'une ou l'autre des commandes alpha et gamma selon un critère de sélection, et d'augmentation de retard $t_{ret}$ si la valeur de la variation de la résistance du moteur est inférieure à la valeur seuil.

Selon un mode de réalisation, le critère de sélection comprend le choix d'une commande gamma dès lors que l'angle $\alpha$ est compris entre 50° et 80°.

## BRÈVE DESCRIPTION DES DESSINS

D'autres caractéristiques et avantages apparaîtrons dans la description qui va suivre des modes de mise en oeuvre du procédé de commande de freinage d'un moteur selon l'invention, donnés à titre d'exemples non limitatifs, en référence aux dessins annexés dans lesquels :

- la figure 1 est une représentation schématique d'un interrupteur commandé comprenant deux thyristors montés tête-bêche en parallèle,
- la figure 2 est une représentation schématique d'un circuit comprenant un moteur alimenté par une source de tension alternative via un interrupteur commandé piloté par l'unité de traitement et de commande selon l'invention,
- la figure 3 est une représentation schématique d'un circuit équivalent d'un moteur asynchrone, Rs et Xs étant respectivement la résistance et la réactance du stator du moteur, Rr/s et Xr étant, respectivement, la résistance et la réactance du rotor, « s » étant le glissement du moteur,
- la figure 4 illustre le principe de commande de fermeture de l'interrupteur commandé par l'unité de traitement et de commande selon l'invention,
- la figure 5 est un ordinogramme illustrant l'enchaînement des étapes de la séquence de freinage selon l'invention, « $\gamma$ » indiquant que le test est positif (oui), et « n » que le test est négatif (non),

- les figures 6a à 6c représentent, pendant l'exécution d'un procédé de freinage, d'un moteur alimentant un compresseur centrifuge, connu de l'état de la technique, l'évolution en fonction du temps (sur les axes horizontaux) de la vitesse du moteur (Figure 6.a), du courant alimentant le moteur (Figure 6.b), et de l'angle α (Figure 6.c),

- les figures 7a à 7c représentent, pendant l'exécution du procédé de freinage d'un moteur alimentant un compresseur centrifuge, selon l'invention, l'évolution en fonction du temps (sur les axes horizontaux) de la vitesse du moteur (Figure 7.a), du courant alimentant le moteur (Figure 7.b), et de l'angle α (Figure 7.c),

- les figures 8a à 8c représentent, pendant l'exécution d'un procédé de freinage, d'un moteur alimentant un convoyeur, connu de l'état de la technique, l'évolution en fonction du temps (sur les axes horizontaux) de la vitesse du moteur (Figure 8.a), du courant alimentant le moteur (Figure 8.b), et de l'angle α (Figure 8.c),

- les figures 9a à 9c représentent, pendant l'exécution du procédé de freinage d'un moteur alimentant un convoyeur, selon l'invention, l'évolution en fonction du temps (sur les axes horizontaux) de la vitesse du moteur (Figure 9.a), du courant alimentant le moteur (Figure 9.b), et de l'angle α (Figure 9.c).

**EXPOSÉ DÉTAILLÉ DE MODES DE RÉALISATION PARTICULIERS**

La figure 2 illustre un dispositif 1 comprenant un moteur 10 électrique, une source 20 de tension alternative $V_{AC}$ destinée à alimenter le moteur 10 via un interrupteur commandé 30a, 30b, 30c. Le dispositif 1 comprend en outre une unité de traitement et de commande 35 destinée à commander la commutation d'un état bloqué (interrupteur ouvert) vers un état passant (interrupteur fermé) de l'interrupteur commandé 30a, 30b, 30c.

La source 20 peut par exemple être une source triphasée qui alimente le moteur en courant au moyen de ses trois phases 21a, 21b, 21c.

Chaque phase 21a, 21b, 21c est connectée au moteur 10 par un interrupteur commandé 30a, 30b, 30c.

Plus particulièrement, l'interrupteur commandé 30a, 30b, 30c est adapté pour connecter ou déconnecter le moteur 10 de la phase 21a, 21b, 21c.

Chaque interrupteur commandé 30a, 30b, 30c peut comprendre deux thyristors montés tête-bêche en parallèle. Ainsi, les thyristors 301a, 301b d'une phase 21a, 21b, 21c de la source 20 sont aptes à connecter le moteur à ladite phase 21a, 21b, 21c respectivement en alternance positive et négative en courant de cette dernière.

Le dispositif 1 comprend également des moyens de mesure de la tension 31a, 31b, 31c d'alimentation (la tension des trois phases 21a, 21b, 21c de la source 10). Les moyens de mesure sont par exemple des voltmètres.

Le dispositif 1 comprend également des moyens de mesure du courant 32a, 32b, 32c d'alimentation (le courant des trois phases 21a, 21b, 21c de la source 10). Les moyens de mesure sont par exemple des ampèremètres.

Le dispositif 1 comprend des moyens de détection 33a, 33b, 33c de l'instant de passage par zéro du courant. Les moyens de détection 33a, 33b, 33c peuvent être des moyens de mesure de la dérivée du courant, par exemple des capteurs Rogowski.

L'unité de traitement et de commande 35 est configurée pour alimenter individuellement chacune des gâchettes de thyristors 301a, 301b, et ainsi commander la fermeture de ces derniers lorsqu'ils sont alimentés avec l'alternance en tension adéquate de la phase correspondante.

Chaque interrupteur commandé 30a, 30b, 30c forme ainsi un moyen de retard de l'alimentation du moteur 10 pour retarder l'alimentation en courant du moteur 10.

Les moyens de mesure de la tension 31a, 31b, 31c d'alimentation sont agencés de manière à permettre, sur chacune des phases 21a, 21b, 21c de la source 20 de tension, une mesure de tension en amont de l'interrupteur correspondant 30a, 30b, 30c.

Les moyens de mesure du courant 32a, 32b, 32c d'alimentation sont agencés de manière à permettre, sur chacune des phases 21a, 21b, 21c de la source 20 de tension, une mesure du courant en amont de l'interrupteur correspondant 30a, 30b, 30c.

Les moyens de détection 33a, 33b, 33c sont agencés de manière à permettre, sur chacune des phases 21a, 21b, 21c de la source 20 de tension, la détection de l'instant de passage par zéro du courant ou de sa dérivée traversant le moteur 10.

L'unité de traitement et de commande 35 est configurée pour, à partir des valeurs mesurées par les moyens de mesure du courant 32a, 32b, 32c et par les moyens de mesure de la tension 31a, 31b, 31c, déterminer une résistance de l'ensemble comprenant l'interrupteur commandé(s), le moteur, et les câbles (reliant le « soft-starter » au moteur), dite résistance interrupteurs/moteur/câbles. La détermination de cette résistance interrupteurs/moteur est préférentiellement faite selon un calcul de composante directe qui est une valeur des composantes symétriques. Une telle valeur présente l'avantage de fournir une donnée reflétant l'état du moteur selon les trois phases. Un tel calcul peut être obtenu à partir des étapes suivantes de :

- détermination, à partir des moyens de mesure du courant 32a, 32b, 32c et des moyens de mesure de la tension 31a, 31b, 31c, des valeurs fondamentales, à la fréquence du réseau, du courant en amont ou en aval et de la tension en amont des interrupteurs commandés 30a, 30b, 30c,

- calcul à partir de ces valeurs fondamentales des composantes directes du courant et de la tension,

- division de la composante directe de la tension par la composante directe du courant de manière à obtenir la résistance directe.

Ce calcul peut être exécuté une fois par cycle de la tension d'alimentation.

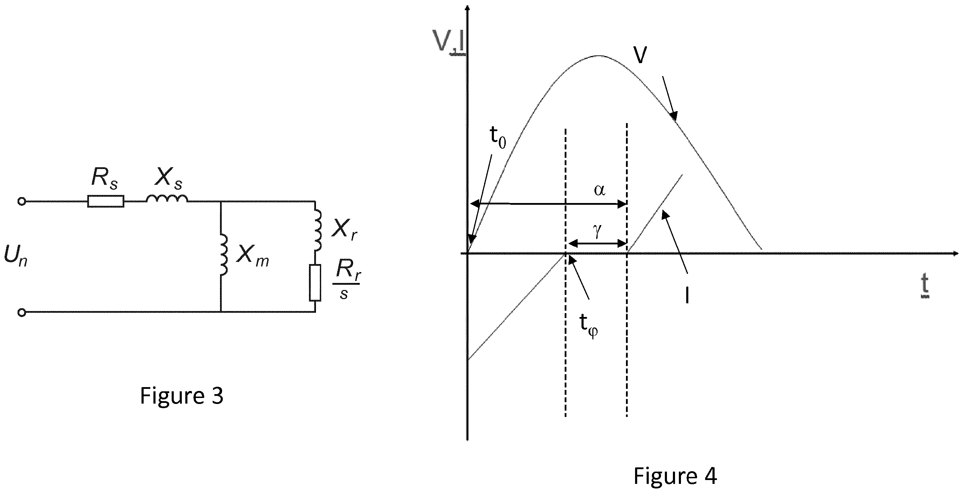

Or la résistance des interrupteurs 30a, 30b, 30c ne variant pas en fonction de la vitesse de rotation du moteur 10, et la résistance des thyristors étant faible à l'état passant, donc négligeable, toute variation de la résistance interrupteurs/moteur correspond donc principalement à une variation de résistance du moteur. La figure 3 illustre ainsi un schéma d'équivalence ramené au stator d'un moteur 10 de type asynchrone pour lequel l'invention est particulièrement avantageuse. On peut voir que les composantes résistives d'un tel moteur 10 présentent deux contributions, une résistance statique Rs (Résistance stator) et une résistance variable $\frac{Rr}{s}$ (Résistance rotor) qui est inversement proportionnelle au glissement du moteur s.

Lors d'une phase d'arrêt du moteur 10, le glissement du moteur « s » passe d'une valeur typiquement inférieure à 1 %, correspondant au moteur tournant à vitesse nominale, à une valeur de 1, pour le moteur 10 à l'arrêt. Il en résulte donc que lors du freinage du moteur 10, la valeur de la résistance rotor $\frac{Rr}{s}$ est divisée par près de 100, et qu'il est possible de déterminer à partir de la variation de la résistance du moteur 10 si la vitesse de rotation varie, et plus particulièrement si elle diminue.

L'unité de traitement et de commande 35 est ainsi configurée pour mettre en oeuvre une telle mesure de la variation de la résistance moteur, pour déterminer un instant ou retard $t_{ret}$ à partir duquel l'interrupteur commandé 30a, 30b, 30c reçoit l'instruction de devenir passant.

La figure 4 illustre le principe de commande de fermeture de l'interrupteur commandé 30a, 30b, 30c par l'unité de traitement et de commande 35. L'unité de traitement et de commande 35 peut, dans un premier temps, détecter le passage par zéro en front montant de la tension d'alimentation.

Par passage par zéro en front montant, nous entendons un passage par zéro vers des valeurs positives de la tension de l'au moins une phase de la source d'alimentation. L'unité de traitement et de commande 35 détecte également des passages par zéro en front descendant de l'au moins une phase de la source d'alimentation. Par passage par zéro en front descendant, nous entendons un passage par zéro vers des valeurs négatives de la tension de l'au moins une phase de la source d'alimentation. Par ailleurs, l'expression « passage par zéro » signifie aussi bien «passage par zéro en front montant » que « passage par zéro en front descendant ».

Enfin, l'expression « passage par zéro » est relative à une période T donnée de la tension alternative de la phase considérée de la source d'alimentation. Les passages par zéro de la tension de l'au moins une phase sont détectés par des techniques connues de l'homme du métier, et ne seront pas décrits plus en détails dans la suite de la description.

La détection du passage par zéro peut mettre en oeuvre les moyens de mesure de tension 31a, 31b, 31c. L'instant de passage par zéro de la tension d'alimentation est noté $t_0$. L'unité de traitement et de commande 35 peut également détecter l'instant $t_\varphi$ à partir duquel le courant passe par zéro dans l'interrupteur commandé 30a, 30b, 30c (étant entendu que la courant ne passe que dans un seul thyristor à la fois). L'instant $t_\varphi$ est bien entendu compris dans la période considérée. L'instant $t_\varphi$ est mesuré par rapport au temps $t_0$ de passage par zéro de la tension (de la phase considérée). Contrairement à l'instant $t_0$ qui se répète périodiquement, l'instant $t_\varphi$ peut varier d'une période à l'autre.

Dès lors que le courant traversant un thyristor s'annule, ledit thyristor devient bloquant. Le thyristor ne peut redevenir passant (fermé) que s'il reçoit une instruction d'amorçage, à un retard $t_{ret}$ (instruction de fermeture) au niveau de sa gâchette lors d'une alternance positive de la tension à ses bornes. L'instruction d'amorçage peut être envoyée par l'unité de traitement et de commande 35.

Le retard $t_{ret}$ peut être défini par rapport à l'instant de passage par zéro $t_0$ de la tension. Le délai temporel entre le passage par zéro de la tension et l'instant d'amorçage, $\Delta t_{am\alpha} = t_{ret} - t_0$, défini un angle, dit angle $\alpha$ (en degrés «°»), et vérifiant la relation $\alpha=(\Delta t_{am}*360)/T$. Dès lors qu'il est défini par rapport à l'instant de passage par zéro $t_0$ de la tension, nous parlons de contrôle du retard $t_{red}$ par une commande alpha.

De manière équivalente, le retard $t_{ret}$ peut être défini par rapport à l'instant de passage par zéro $t_\varphi$ du courant. Le délai temporel entre le passage par zéro du courant et l'instant d'amorçage, $\Delta t_{am\gamma} = t_{ret} - t_\varphi$, défini un angle, dit angle $\gamma$ (en degrés «°»), et vérifiant la relation $\gamma=(\Delta t_{am\gamma}*360)/T$. Dès lors qu'il est défini par rapport à l'instant de passage par zéro $t_\varphi$ du courant, nous parlons de contrôle du retard $t_{red}$ par une commande gamma.

Toujours de manière équivalente, le retard $t_{ret}$ peut être défini par rapport à l'instant de premier passage par zéro $t_\delta$ de la dérivée du courant. Le délai temporel entre le premier passage par zéro de la dérivée du courant et l'instant d'amorçage, $\Delta t_{am\delta\gamma} = t_{ret} - t_\delta$, défini un angle, dit angle $\delta_\gamma$ (en degrés «°»), et vérifiant la relation $\delta_\gamma=(\Delta t_{am\delta\gamma}*360)/T$. Dès lors qu'il est défini par rapport à l'instant de premier passage par zéro $t_\delta$ de la dérivée du courant, nous parlons de contrôle du retard $t_{ret}$ par une commande delta-gamma.

Tout au long de l'énoncé de la présente invention, nous confondons les expressions « commande gamma » et « commande delta-gamma » qui prennent la dénomination commande gamma. Il est ainsi entendu que dès lors qu'une commande gamma est exécutée, elle est définie soit par rapport au passage par zéro du courant soit par rapport au premier passage par zéro de la dérivée du courant.

Par ailleurs, par détection du zéro du courant ou du premier passage par zéro du courant, nous entendons le courant de ligne, autrement dit le courant alimentant le moteur 10.

L'unité de traitement et de commande 35 peut contrôler, à chaque période de la tension alternative $V_{AC}$, pour chaque thyristor, le retard $t_{ret}$ desdits thyristors de manière à ajuster l'alimentation en courant du moteur 10.

Ainsi, toutes les n périodes précédentes de la tension alternative $V_{AC}$ (n étant un entier positif), l'amorçage du thyristor peut être ajusté de manière à réduire progressivement l'alimentation en courant du moteur 10.

L'ajustement progressif de l'amorçage du thyristor peut comprendre une augmentation du retard $t_{ret}$ toutes les n périodes de la tension alternative $V_{AC}$.

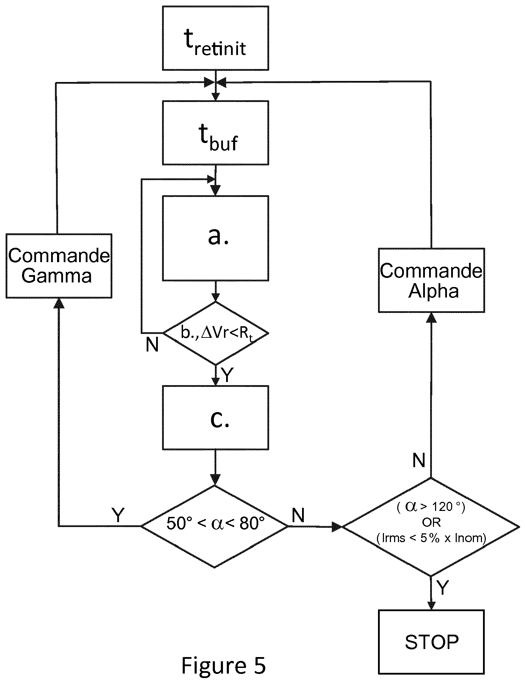

Le procédé comprend une séquence de freinage dont l'enchainement des étapes est repris dans l'ordinogramme de la figure 5.

Le procédé peut débuter par une étape d'initialisation du retard $t_{ret}$ à une valeur $t_{retinit}$, adaptée pour conférer à l'interrupteur commandé un fonctionnement en pleine onde.

De manière avantageuse, $t_{retinit}$ étant avantageusement ajustée de manière à déclencher la fermeture de l'interrupteur commandé 30a, 30b, 30c dès l'instant de passage par zéro du courant. Autrement dit, une commande de fermeture à l'instant $t_{\varphi}$ est envoyée à l'interrupteur commandé 30a, 30b, 30c, par l'unité de traitement et de commande 35.

La séquence de freinage dans laquelle, toutes les n périodes de la tension alternative $V_{AC}$, « n » étant un nombre entier non nul, les étapes suivantes sont exécutées :

a) détermination de la valeur d'une variation ΔRr de résistance électrique du moteur 10 durant les n périodes précédentes de la tension alternative $V_{AC}$,
b) comparaison de la valeur de la variation ΔRr de résistance électrique du moteur 10, déterminée à l'étape a), avec une valeur seuil de résistance $R_t$,
c) augmentation du retard $t_{ret}$ si la valeur de la variation ΔRr de la résistance du moteur 10 est inférieure à la valeur seuil, l'augmentation du retard $t_{ret}$ étant exécutée selon une commande gamma dès lors que l'angle $\alpha$ est compris dans une plage de valeurs donnée, et selon une commande alpha dans les autres cas.

Plus particulièrement, la plage de valeurs donnée s'étend sur 30° entre 45° et 80°.

Toujours plus particulièrement, la plage de valeurs donnée s'étend entre 50 et 80°.

Alternativement, la plage de valeurs données peut s'étendre entre 45 et 75°.

Ainsi, l'augmentation séquentielle du retard $t_{ret}$ permet de réduire progressivement le courant alimentant le moteur. La réduction du courant alimentant le moteur 10 permet d'induire un changement d'état dudit moteur 10.

Par changement d'état, nous entendons une variation de la résistance électrique du moteur 10. Il est entendu que l'augmentation du retard $t_{ret}$ (donc la réduction du courant alimentant le moteur) génère une diminution de la résistance électrique du moteur 10.

Par ailleurs, l'augmentation du retard $t_{ret}$ selon la commande alpha est préférée pour des angles $\alpha$ en dehors de la gamme d'angles 50°-80°. En effet, la commande alpha qui est référencée par rapport au passage par zéro de la tension est très précise (les passages par zéro de la tenson étant périodiques) par rapport à la commande gamma pour laquelle le temps $t_{\varphi}$ peut varier d'une période à l'autre. Cependant, la Demanderesse a remarqué la présence d'oscillations du courant alimentant le moteur 10. Plus particulièrement, la Demanderesse a remarqué que l'amplitude desdites oscillations est plus importante dès lors que l'angle $\alpha$ est compris entre 50° et 80°. Ainsi, une plage de valeurs donnée s'étendant entre 50 et 80° peut être préférée.

Des oscillations du courant alimentant le moteur 10 sont également observées lorsque l'augmentation du retard $t_{ret}$ est exécutée selon la commande gamma. Cependant lesdites oscillations ont une amplitude inférieure à celle observée en commande alpha.

Par conséquent, le critère de sélection de l'une ou l'autre des commandes alpha et gamma est basée sur un compromis entre précision de la commande d'augmentation du retard $t_{ret}$ et une limitation des oscillations du courant alimentant le moteur 10.

De manière avantageuse, l'étape a) est une étape de détermination d'une variation temporelle relative de la résistance du moteur $\dfrac{\frac{\Delta R}{R}(t)}{\Delta t}$, ladite variation temporelle relative étant préférentiellement calculée à partir de l'équation suivante :

$$\frac{\frac{\Delta R}{R}(t)}{\Delta t} = \frac{\frac{R(t-nT) - R(t)}{R(t-nT)}}{nT}$$

avec R(t) une valeur relative à la résistance du moteur déterminée à un instant t et T la durée d'une période de la tension alternative $V_{AC}$.

Selon un mode de réalisation avantageux, la valeur seuil de résistance $R_t$ peut être comprise entre 0,05 et 0,5, préférentiellement comprise entre 0,1 et 0,3, encore plus préférentiellement comprise entre 0,15 et 0,25. Par exemple, une valeur seuil de résistance $R_t$ égale à 0,2 semble convenir à la plupart des applications.

Par ailleurs l'augmentation du retard $t_{ret}$ à l'éta-

pe est exécutée selon un incrément Δt, de sorte que l'angle défini par la relation $2\pi\Delta t/T$ soit inférieur à inférieure à 5°, préférentiellement inférieure à 3°, encore plus préférentiellement comprise entre 0,5 et 2°.

Selon l'invention, il est possible d'imposer un délai d'attente $t_{buf}$ avant de répéter la séquence de freinage dès lors que le retard $t_{ret}$ a été incrémenté selon l'incrément Δt. Le temps d'attente $t_{buf}$ peut préférentiellement être un multiple entier positif p de la période T de la tension alternative $V_{AC}$, encore plus préférentiellement p est égal à 2 (par exemple pour une tension d'alimentation à 50Hz, le temps d'attente peut être égal à 40 ms).

Enfin, le procédé de freinage selon l'invention peut comprendre une étape de commande STOP du procédé de commande de freinage. En effet, dès lors que le courant alimentant le moteur est inférieur à une valeur prédéterminée de courant et/ou que l'angle d'amorçage α est supérieur à 120°, le moteur n'a plus assez d'inertie pour continuer à tourner tout seul (autrement dit le courant l'alimentant est faible). Par conséquent, l'alimentation en courant du moteur peut être coupée, et le procédé de freinage arrêté. La valeur prédéterminée de courant peut par exemple être une valeur inférieure à 5% du courant nominal du moteur.

La commande de freinage d'un moteur asynchrone a été testée en simulation avec plusieurs logiciels (Matlab/Simulink et EMTP-ATP) en incluant toutes les composantes du système (réseau d'alimentation, câbles, moteur et sa charge).

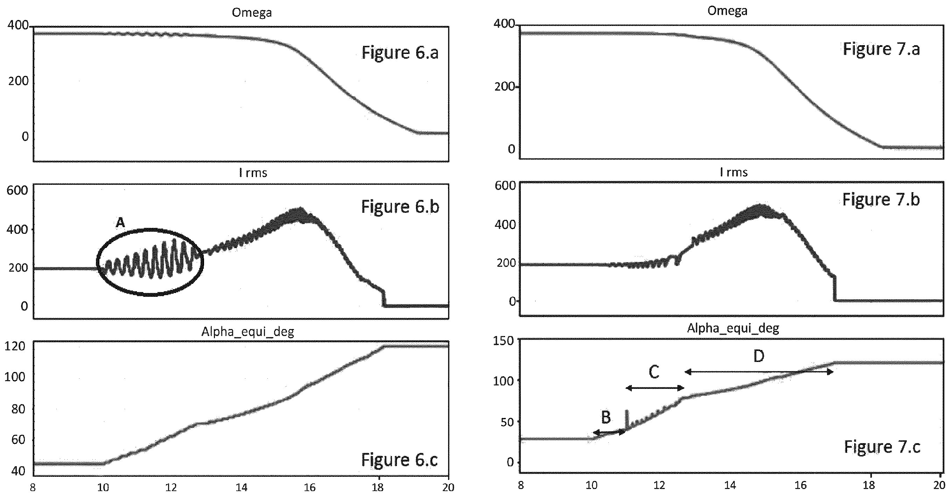

L'invention a également été simulée sur un premier banc d'essai composé d'un moteur de 2500 kW, à deux pôles et fonctionnant à 60Hz, et entrainant un compresseur centrifuge. Les figures 6a à 6c sont relatives à une commande de freinage du moteur selon une commande alpha commandée par le changement d'état du moteur (autrement dit le retard $t_{ret}$ n'est incrémenté que si la valeur de la variation ΔRr de la résistance du moteur 10 est inférieure à la valeur seuil).

Les figures 7a à 7c sont relatives à une commande de freinage du moteur par le procédé de freinage selon l'invention.

Aux figures 6a-6c sont présentées la vitesse de rotation oméga (sur l'axe vertical) du moteur en fonction du temps (sur l'axe horizontal) (figure 6.a), à l'évolution de courant RMS alimentant le moteur (figure 6.b), et à la l'évolution de l'angle α (figure 6.c). De manière générale, la vitesse du moteur diminue dès lors que l'angle α augmente. Dans la zone A (illustrée à la figure 6b), une augmentation de l'amplitude des oscillations du courant RMS est clairement observée. Cet effet n'est pas prévisible, et son apparition peut dépendre du mode de fonctionnement de la charge alimentée par le moteur (rappelons que la charge est ici un compresseur centrifuge).

Dès lors que la commande de freinage selon l'invention est appliquée au même moteur les graphiques des figures 7a à 7c sont obtenus. La figure 7.a illustre la vitesse de rotation oméga (sur l'axe vertical) du moteur en fonction du temps (sur l'axe horizontal), la figure 7b, l'évolution de courant RMS alimentant le moteur, et à la figure 7.c, l'évolution de l'angle α. Les zones B et D sont relatives à un contrôle selon une commande alpha, et la zone C est relative à un contrôle selon une commande gamma. Une légère augmentation de l'amplitude des oscillations de courant est clairement observée sur la zone B (contrôle par commande alpha), et ladite augmentation se stabilise (zone C) dès lors que le contrôle selon une commande gamma est exécuté. Le passage d'un contrôle selon une commande alpha à un contrôle selon une commande gamma permet de limiter l'augmentation des oscillations du courant pendant la phase de freinage du moteur. Sans ce changement de contrôle, l'amplitude des oscillations du courant aurait augmentée de manière plus importante (tel qu'illustré à la figure 6.b).

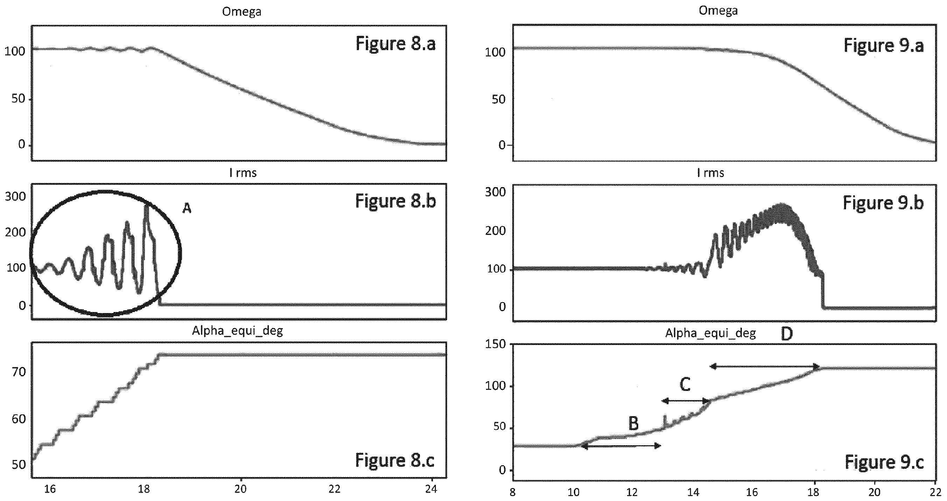

L'invention a également été simulée sur un second banc d'essai composé d'un moteur de 1800 kW, à six pôles, fonctionnant à 50Hz, et entrainant un convoyeur. Les figures 8a à 8c sont relatives à une commande de freinage du moteur selon une commande alpha commandée par le changement d'état du moteur (autrement dit le retard $t_{ret}$ n'est incrémenté que si la valeur de la variation ΔRr de la résistance du moteur 10 est inférieure à la valeur seuil).

Les figures 9a à 9c sont relatives à une commande de freinage du moteur par le procédé de freinage selon l'invention.

Aux figures 8a-8c sont présentées la vitesse de rotation oméga (sur l'axe vertical) du moteur en fonction du temps (sur l'axe horizontal) (figure 8.a), à l l'évolution de courant RMS alimentant le moteur (figure 8.b), et à la l'évolution de l'angle α (figure 8.c). De manière générale, la vitesse du moteur diminue dès lors que l'angle α augmente. Dans la zone A (illustrée à la figure 8b), une augmentation de l'amplitude des oscillations du courant RMS est clairement observée. Cet effet n'est pas prévisible, et son apparition peut dépendre du mode de fonctionnement de la charge alimentée par le moteur (rappelons que la charge est ici un convoyeur).

Dès lors que la commande de freinage selon l'invention est appliquée au même moteur les graphiques des figures 9a à 9c sont obtenus. La figure 9.a illustre la vitesse de rotation oméga (sur l'axe vertical) du moteur en fonction du temps (sur l'axe horizontal), la figure 9.b, l'évolution de courant RMS alimentant le moteur, et à la figure 9.c, l'évolution de l'angle α. Les zones B et D sont relatives à un contrôle selon une commande alpha, et la zone C est relative à un contrôle selon une commande gamma. Une légère augmentation de l'amplitude des oscillations de courant est clairement observée sur la zone B (contrôle par commande alpha), et ladite augmentation se stabilise (zone C) dès lors que le contrôle selon une commande gamma est exécuté. Le passage d'un contrôle selon une commande alpha à un contrôle selon une commande gamma permet de limiter l'augmentation des oscillations du courant pendant la phase de freinage du moteur. Sans ce changement de contrôle, l'amplitude des oscillations du courant aurait augmenté de manière plus importante (tel qu'illustré à la figure 8.b).

Ces deux exemples de mise en oeuvre du procédé selon l'invention (illustrés aux figures 7.a-7.c, et 9.a-9.c) comparés à un procédé de commande de freinage en commande alpha exclusive permettent de montrer qu'il est possible de limiter de manière certaine l'amplitude du courant RMS traversant le moteur.

L'invention concerne également un produit programme d'ordinateur comportant des instructions de code de programme pour l'exécution, lorsque ledit programme est exécuté sur un calculateur, des étapes de détermination d'une variation d'une résistance du moteur, de comparaison de ladite variation à une valeur seuil de résistance $R_t$, de sélection d'une commande d'augmentation du retard $t_{ret}$ choisi parmi l'une ou l'autre des commandes alpha et Gamma selon un critère de sélection, et d'augmentation de retard $t_{ret}$ si la valeur de la variation de la résistance du moteur est inférieure à la valeur seuil.

Par calculateur, nous entendons tout dispositif électronique capable d'exécuter les différentes instructions de code de programme, plus particulièrement, le dispositif électronique peut comprendre un processeur, une carte électronique de contrôle, un ordinateur.

Selon un mode de réalisation, le critère de sélection comprend le choix d'une commande gamma dès lors que l'angle $\alpha$ est compris entre 50° et 80°.

REFERENCES

[1] WO 01/89073 A2

[2] FR 3 020 525

**Revendications**

1. Procédé de commande de freinage d'un moteur (10) électrique connecté à une source (20) de tension alternative $V_{AC}$ de période T, le procédé consistant, à chaque période de la tension alternative $V_{AC}$, à alimenter le moteur (10) en courant, via l'amorçage d'un interrupteur commandé (30a, 30b, 30c), avec un retard $t_{ret}$, à un angle $\alpha$ d'amorçage, ledit angle $\alpha$ étant mesuré par rapport au passage par zéro de la tension alternative $V_{AC}$, le procédé comprenant une séquence de freinage dans laquelle, toutes les n périodes de la tension alternative $V_{AC}$, les étapes suivantes sont exécutées :

    a) détermination de la valeur d'une variation $\Delta Rr$ de résistance électrique du moteur (10) durant les n périodes précédentes de la tension alternative $V_{AC}$,
    b) comparaison de la valeur de la variation $\Delta Rr$ de résistance électrique du moteur (10), déterminée à l'étape a), avec une valeur seuil de résistance $R_t$,
    c) augmentation du retard $t_{ret}$ si la valeur de la variation $\Delta Rr$ de la résistance du moteur (10) est inférieure à la valeur seuil, l'augmentation du retard $t_{ret}$ étant exécutée selon une commande gamma dès lors que l'angle $\alpha$ est compris dans une plage de valeurs donnée, et selon une commande alpha dans les autres cas, l'augmentation du retard $t_{ret}$ selon la commande gamma correspondant à un angle d'amorçage $\gamma$ mesuré par rapport au passage par zéro de la période considérée du courant délivré par la source.

2. Procédé selon la revendication 1, dans lequel la plage de valeurs donnée s'étend sur 30° entre 45° et 80°.

3. Procédé selon la revendication 1 ou 2, dans lequel la plage de valeurs donnée s'étend entre 50° et 80°.

4. Procédé selon la revendication 1 ou 2, dans lequel la plage de valeurs donnée s'étend entre 45° et 75°.

5. Procédé selon l'une des revendications 1 à 4, dans lequel le procédé débute par une étape d'initialisation du retard $t_{ret}$ à une valeur $t_{retinit}$, adaptée pour conférer à l'interrupteur commandé un fonctionnement en pleine onde, $t_{retinit}$ étant avantageusement ajustée de manière à déclencher la fermeture de l'interrupteur commandé (30a, 30b, 30c) dès l'instant de passage par zéro d'un courant traversant l'interrupteur commandé (30a, 30b, 30c).

6. Procédé selon l'une des revendications 1 à 5, dans lequel, à l'étape c), l'augmentation du retard $t_{ret}$ est exécutée selon un incrément $\Delta t$, de sorte que l'angle défini par la relation $2\pi\Delta t/T$ soit inférieur à 5°, préférentiellement inférieur à 3°, encore plus préférentiellement compris entre 0.5 et 2°.

7. Procédé selon l'une des revendications 1 à 6, dans lequel dès lors que le retard $t_{ret}$ est augmenté à l'étape c), un temps d'attente $t_{buf}$ est imposé avant de répéter la séquence de freinage, préférentiellement, le temps d'attente $t_{buf}$ est un multiple entier p de la période T de la tension alternative $V_{AC}$, encore plus préférentiellement p est égal à 2.

8. Procédé selon l'une des revendications 1 à 7, dans lequel l'étape a) est une étape de détermination d'une variation temporelle relative de la résistance du moteur $\dfrac{\dfrac{\Delta R}{R}(t)}{\Delta t}$, ladite variation temporelle relative étant préférentiellement calculée à partir de l'équation suivante :

$$\frac{\frac{\Delta R}{R}(t)}{\Delta t} = \frac{R(t-nT)-R(t)}{R(t-nT)} \cdot \frac{1}{nT}$$

avec R(t) une valeur relative à la résistance du moteur déterminée à un instant t.

9. Procédé selon l'une des revendications 1 à 8, dans lequel dès lors que l'angle d'amorçage α est supérieur à 120° et/ou le courant circulant dans le moteur (10) est inférieur à une valeur de courant prédéterminée, il est mis fin au procédé de commande de freinage du moteur (10), avantageusement, l'interrupteur commandé (30a, 30b, 30c) est ouvert.

10. Procédé selon l'une des revendications 1 à 9, dans lequel la valeur seuil de résistance $R_t$ est comprise entre 0,05 et 0,5, préférentiellement comprise entre 0,1 et 0,3, encore plus préférentiellement comprise entre 0,15 et 0,25.

11. Procédé selon l'une des revendications 1 à 10, dans lequel l'interrupteur commandé (30a, 30b, 30c) comprend au moins deux thyristors montés tête-bêche en parallèle.

12. Produit programme d'ordinateur comportant des instructions de code de programme pour l'exécution, lorsque ledit programme est exécuté sur un calculateur, des étapes de détermination d'une variation d'une résistance du moteur (10), de comparaison de ladite variation à une valeur seuil de résistance $R_t$, de sélection d'une commande d'augmentation du retard $t_{ret}$ choisi parmi l'une ou l'autre des commandes alpha et gamma selon un critère de sélection, et d'augmentation de retard $t_{ret}$ si la valeur de la variation de la résistance du moteur (10) est inférieure à la valeur seuil selon l'une quelconque des revendications 1 à 11.

13. Produit programme d'ordinateur selon la revendication 12, dans lequel le critère de sélection comprend le choix d'une commande gamma dès lors que l'angle α est compris entre 50° et 80°.

**Patentansprüche**

1. Bremssteuerungsverfahren für einen Elektromotor (10), der an eine Spannungsquelle (20) mit Wechselspannung $V_{AC}$ der Periode T angeschlossen ist, wobei das Verfahren darin besteht, bei jeder Periode der Wechselspannung $V_{AC}$ den Motor (10) durch Zünden eines steuerbaren Schalters (30a, 30b, 30c) mit Strom zu versorgen, und zwar mit einer Verzögerung $t_{ret}$ und einem Zündwinkel α, wobei der Winkel α in Bezug auf den Nulldurchgang der Wechselspannung $V_{AC}$ gemessen wird, wobei das Verfahren eine Bremssequenz umfasst, in der für alle n Perioden der Wechselspannung $V_{AC}$ die folgenden Schritte ausgeführt werden:

a) Bestimmen des Wertes einer Änderung ΔRr des elektrischen Widerstands des Motors (10) während der n vorhergehenden Perioden der Wechselspannung $V_{AC}$,

b) Vergleichen des in Schritt a) bestimmten Wertes der Änderung ΔRr des elektrischen Widerstands des Motors (10) mit einem Widerstandsschwellenwert $R_t$,

c) Erhöhen der Verzögerung $t_{ret}$, wenn der Wert der Widerstandsänderung ΔRr des Motors (10) niedriger als der Schwellenwert ist, wobei die Erhöhung der Verzögerung $t_{ret}$ gemäß einer Gamma-Steuerung erfolgt, wenn der Winkel α innerhalb eines gegebenen Wertebereichs liegt, und andernfalls gemäß einer Alpha-Steuerung erfolgt, wobei die Erhöhung der Verzögerung $t_{ret}$ gemäß der Gamma-Steuerung einem Zündwinkel γ entspricht, der in Bezug auf den Nulldurchgang der betrachteten Periode des von der Quelle gelieferten Stroms gemessen wird.

2. Verfahren nach Anspruch 1, wobei der gegebene Wertebereich sich über 30° zwischen 45° und 80° erstreckt.

3. Verfahren nach Anspruch 1 oder 2, wobei der gegebene Wertebereich sich zwischen 50° und 80° erstreckt.

4. Verfahren nach Anspruch 1 oder 2, wobei der gegebene Wertebereich sich zwischen 45° und 75° erstreckt.

5. Verfahren nach einem der Ansprüche 1 bis 4, wobei das Verfahren mit einem Schritt des Einleitens der Verzögerung $t_{ret}$ bei einem Wert $t_{retinit}$ beginnt, der darauf abgestimmt ist, dem steuerbaren Schalter einen Vollwellenbetrieb aufzuprägen, wobei $t_{retinit}$ vorteilhaft so eingestellt ist, dass das Schließen des steuerbaren Schalters (30a, 30b, 30c) ab dem Zeitpunkt des Nulldurchgangs eines den steuerbaren Schalter (30a, 30b, 30c) durchfließenden Stroms ausgelöst wird.

6. Verfahren nach einem der Ansprüche 1 bis 5, wobei in Schritt c) die Erhöhung der Verzögerung $t_{ret}$ gemäß einem Inkrement Δt erfolgt, so dass der durch das Verhältnis $2\pi\Delta t/T$ definierte Winkel unter 5°, vorzugsweise unter 3°, noch bevorzugter zwischen 0,5 und 2°, liegt.

7. Verfahren nach einem der Ansprüche 1 bis 6, wobei dann, wenn die Verzögerung $t_{ret}$ in Schritt c) erhöht wird, eine Wartezeit $t_{buf}$ auferlegt wird, bevor die Bremssequenz wiederholt wird, wobei vorzugsweise die Wartezeit $t_{buf}$ ein ganzzahliges Vielfaches p der Periode T der Wechselspannung $V_{AC}$ ist, wobei noch bevorzugter p gleich 2 ist.

8. Verfahren nach einem der Ansprüche 1 bis 7, wobei der Schritt a) ein Schritt des Bestimmens einer relativen zeitlichen Änderung des Wiederstands des Motors $\dfrac{\frac{\Delta R}{R}(t)}{\Delta t}$ ist, wobei die relative zeitliche Änderung vorzugsweise ausgehend von der nachstehenden Gleichung berechnet wird:

$$\frac{\frac{\Delta R}{R}(t)}{\Delta t} = \frac{\frac{R(t-nT)-R(t)}{R(t-nT)}}{nT}$$

worin R(t) ein Wert bezogen auf den zu einem Zeitpunkt t bestimmten Widerstand des Motors ist.

9. Verfahren nach einem der Ansprüche 1 bis 8, wobei dann, wenn der Zündwinkel $\alpha$ größer als 120° ist und/oder der im Motor (10) fließende Strom geringer als ein vorbestimmter Stromwert ist, das Bremssteuerungsverfahren für den Motor (10) abgebrochen und vorteilhaft der steuerbare Schalter (30a, 30b, 30c) geöffnet wird.

10. Verfahren nach einem der Ansprüche 1 bis 9, wobei der Widerstandsschwellenwert $R_t$ zwischen 0,05 und 0,5, vorzugsweise zwischen 0,1 und 0,3 und noch bevorzugter zwischen 0,15 und 0,25 liegt.

11. Verfahren nach einem der Ansprüche 1 bis 10, wobei der steuerbare Schalter (30a, 30b, 30c) zumindest zwei antiparallel geschaltete Thyristoren enthält.

12. Computerprogrammprodukt, umfassend Programmcodeanweisungen, um bei Ausführen des Programms auf einem Rechner die folgenden Schritte auszuführen: Bestimmen einer Änderung eines Widerstands des Motors (10); Vergleichen der Änderung mit einem Widerstandsschwellenwert $R_t$; Auswählen einer Steuerung zum Erhöhen der Verzögerung $t_{ret}$, die aus der einen oder anderen aus Alpha- und Gamma-Steuerung nach einem Auswahlkriterium ausgewählt ist, und Erhöhen der Verzögerung $t_{ret}$, wenn der Wert der Widerstandsänderung des Motors (10) niedriger als der Schwellenwert ist, nach einem der Ansprüche 1 bis 11.

13. Computerprogrammprodukt nach Anspruch 12, wobei das Auswahlkriterium die Auswahl einer Gamma-Steuerung umfasst, wenn der Winkel $\alpha$ zwischen 50° und 80° beträgt.

## Claims

1. Method for controlling braking of an electric motor (10) connected to a source (20) of alternating voltage $V_{AC}$ having a period T, the method consisting, at each period of the alternating voltage $V_{AC}$, of supplying the motor (10) with current, via the firing of a controlled switch (30a, 30b, 30c), with a delay $t_{ret}$, at a firing angle $\alpha$, said angle $\alpha$ being measured with respect to the crossing of zero by the alternating voltage $V_{AC}$, the method comprising a sequence of braking in which, every n periods of the alternating voltage $V_{AC}$, the following steps are carried out:

   a) determination of the value of a variation $\Delta Rr$ of electric resistance of the motor (10) during the preceding n periods of the alternating voltage $V_{AC}$,
   b) comparison of the value of the variation $\Delta Rr$ in electric resistance of the motor (10), determined in step a), to a threshold resistance value $R_t$,
   c) increase of the delay $t_{ret}$ if the value of the variation $\Delta Rr$ in the resistance of the motor (10) is less than the threshold value, the increase in the delay $t_{ret}$ being carried out according to a gamma command as soon as the angle $\alpha$ is in a given range of values, and according to an alpha command in the other cases, the increase in the delay $t_{ret}$ according to the gamma command corresponding to a firing angle $\gamma$ measured with respect to the crossing of zero of the period considered of the current delivered by the source.

2. Method according to claim 1, wherein the given range of values extends over 30° between 45° and 80°.

3. Method according to claim 1 or 2, wherein the given range of values extends between 50° and 80°.

4. Method according to claim 1 or 2, wherein the given range of values extends between 45° and 75°.

5. Method according to one of claims 1 to 4, wherein the method begins with a step of initialisation of the delay $t_{ret}$ to a value $t_{retinit}$, adapted to confer full-wave operation onto the controlled switch, $t_{retinit}$ being advantageously adjusted in such a way as to trigger the closing of the controlled switch (30a, 30b, 30c) upon the moment of zero crossing of a current passing through the controlled switch (30a, 30b, 30c).

6. Method according to one of claims 1 to 5, wherein, in step c), the increase in the delay $t_{ret}$ is carried out according to an increment $\Delta t$, in such a way that the angle defined by the relationship $2\pi\Delta t/T$ is less than 5°, preferably less than 3°, even more preferably between 0.5 and 2°.

7. Method according to one of claims 1 to 6, wherein as soon as the delay $t_{ret}$ is increased in step c), a waiting time $t_{buf}$ is imposed before repeating the braking sequence, preferably, the waiting time $t_{buf}$ is a whole-number multiple p of the period T of the alternating voltage $V_{AC}$, even more preferably p is equal to 2.

8. Method according to one of claims 1 to 7, wherein the step a) is a step of determination of a relative temporal variation of the resistance of the motor

$$\frac{\frac{\Delta R}{R}(t)}{\Delta t},$$

said temporal variation preferably being calculated from the following equation:

$$\frac{\frac{\Delta R}{R}(t)}{\Delta t} = \frac{\frac{R(t-nT)-R(t)}{R(t-nT)}}{nT}$$

with R(t) a relative value of the resistance of the motor determined at a time t.

9. Method according to one of claims 1 to 8, wherein as soon as the firing angle $\alpha$ is greater than 120° and/or the current circulating in the motor (10) is less than a predetermined current value, the method for controlling braking of the motor (10) is ended, advantageously, the controlled switch (30a, 30b, 30c) is open.

10. Method according to one of claims 1 to 9, wherein the threshold resistance value $R_t$ is between 0.05 and 0.5, preferably between 0.1 and 0.3, even more preferably between 0.15 and 0.25.

11. Method according to one of claims 1 to 10, wherein the controlled switch (30a, 30b, 30c) comprises at least two thyristors mounted top-to-tail in parallel.

12. Computer program product comprising program code instructions for the execution, when said program is executed on a computer, of the steps of determination of a variation in a resistance of the motor (10), of comparison of said variation to a threshold resistance value Rt, of selection of a command of increasing the delay $t_{ret}$ chosen from one or the other of the alpha and gamma commands according to a selection criterion, and of increasing the delay $t_{ret}$ if the value of the variation in the resistance of the motor (10) is less than the threshold value according to any one of claims 1 to 11.

13. Computer program product according to claim 12, wherein the selection criterion comprises the choice of a gamma command as soon as the angle $\alpha$ is between 50° and 80°.

Figure 2

Figure 1

Figure 4

Figure 3

Figure 5

EP 3 288 173 B1

Omega

Figure 6.a

I rms

A

Figure 6.b

Alpha_equi_deg

Figure 6.c

Omega

Figure 7.a

I rms

Figure 7.b

Alpha_equi_deg

D

C

B

Figure 7.c

Figure 9.a

Figure 9.b

Figure 9.c

Figure 8.a

Figure 8.b

Figure 8.c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5008608 A
- WO 0189073 A2
- FR 3020525